(19) **Europäisches Patentamt European Patent Office Office européen des brevets**

(11) **EP 3 093 568 B1**

(12) **EUROPEAN PATENT SPECIFICATION**

(45) Date of publication and mention of the grant of the patent:
**24.06.2020 Bulletin 2020/26**

(21) Application number: **14881386.8**

(22) Date of filing: **22.12.2014**

(51) Int Cl.:
*F24F 7/08* (2006.01)    *F24F 11/30* (2018.01)
*F24F 12/00* (2006.01)    *F24F 11/62* (2018.01)
*F24F 11/81* (2018.01)    *F24F 110/10* (2018.01)
*F24F 110/12* (2018.01)   *F24F 110/20* (2018.01)
*F24F 110/22* (2018.01)   *F24F 110/70* (2018.01)
*F24F 140/50* (2018.01)   *F24F 11/00* (2018.01)

(86) International application number:
**PCT/JP2014/006388**

(87) International publication number:
**WO 2015/114722 (06.08.2015 Gazette 2015/31)**

(54) **VENTILATION DEVICE**

VENTILATIONSVORRICHTUNG

DISPOSITIF DE VENTILATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2014 JP 2014017357**

(43) Date of publication of application:
**16.11.2016 Bulletin 2016/46**

(73) Proprietor: **Daikin Industries, Ltd.**
**Osaka-shi, Osaka 566-8585 (JP)**

(72) Inventors:
• **MATSUGI, Yoshitaka**
**Kita-ku, Osaka,shi**
**Osaka 530-8323 (JP)**
• **SUNAYAMA, Takayuki**
**Kita-ku, Osaka,shi**
**Osaka 530-8323 (JP)**
• **FUJIMOTO, Tooru**
**Kita-ku, Osaka,shi**
**Osaka 530-8323 (JP)**
• **MAEGAITO, Kenichi**
**Kita-ku, Osaka,shi**
**Osaka 530-8323 (JP)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
**WO-A1-2010/066076    JP-A- H04 347 437**
**JP-A- H07 280 316    JP-A- H11 108 418**
**JP-A- 2002 115 887    JP-A- 2004 108 659**
**JP-A- 2007 139 263    JP-A- 2010 151 337**
**JP-A- 2011 202 916    JP-A- 2011 247 488**
**JP-A- 2012 189 265**

**Description**

TECHNICAL FIELD

The present invention relates to a ventilation device for ventilating a room.

BACKGROUND ART

Some ventilation devices for ventilating a room have an air supply passage and an air exhaust passage, and ventilate the room while allowing outdoor air taken in the air supply passage and room air taken in the air exhaust passage to exchange heat in a heat exchanger (see, e.g., Patent Document 1).

According to this document, the ventilation device is able to perform an operation for ventilating the room while allowing the air in the air supply passage and the air in the air exhaust passage to exchange heat in a total heat exchanger (to be described later), and an operation for ventilating the room without allowing the air in the air supply passage and the air in the air exhaust passage to exchange heat. According to this document, the ventilation using the total heat exchanger is performed in summer and winter, for example, while the ventilation without using the total heat exchanger is performed in seasons between summer and winter (spring and autumn). The ventilation without using the total heat exchanger may save energy consumed by cooling and heating the room, depending on the state of the outdoor air.

CITATION LIST

PATENT DOCUMENT

JP 2011 202916 A discloses a ventilation device switchable between total heat exchange ventilation for exchanging air between inside and outside of a room while allowing outdoor air and room air to perform sensible heat exchange and latent heat exchange, and normal ventilation for exchanging the air between the inside and the outside of the room without allowing the outdoor air and the room air to exchange heat, the ventilation device comprising a controller suitable for controlling an operational state of said in accordance with a discomfort index of the outdoor air, or an energy-saving operation mode in accordance with a difference between enthalpy of the outdoor air and enthalpy of the room air.

[Patent Document 1] Japanese Unexamined Patent Publication No. 2009-243731

SUMMARY OF THE INVENTION

TECHNICAL PROBLEM

However, if switching between the ventilation using the total heat exchanger and the ventilation without using the total heat exchanger is performed only seasonally, user's comfortability may be ensured, but satisfactory energy saving cannot be expected.

The present invention has been achieved in view of the problem described above. It is therefore an object of the present invention to allow a ventilation device for ventilating a room to improve energy savings with almost no loss of user's comfortability.

SOLUTION TO THE PROBLEM

In order to solve the above-described problem, a first aspect of the invention is directed to a ventilation device switchable between total heat exchange ventilation for exchanging air between inside and outside of a room while allowing outdoor air (OA) and room air (RA) to perform sensible heat exchange and latent heat exchange, and normal ventilation for exchanging the air between the inside and the outside of the room without allowing the outdoor air (OA) and the room air (RA) to exchange heat according to claim 1.

A second aspect of the invention is an embodiment of the first aspect of the invention. In the second aspect, the ventilation device further includes: a $CO_2$ concentration sensor (40) detecting a $CO_2$ concentration (C) in the room air (RA), wherein the controller (60) controls the operation of the ventilation device so that the ventilation device operates in the comfortable operation mode if a value of the $CO_2$ concentration (C) detected by the $CO_2$ concentration sensor (40) is higher than a predetermined threshold (Th), or in the energy-saving operation mode if the detected value of the $CO_2$ concentration (C) is not higher than the threshold (Th).

In this configuration, the comfortable operation mode and the energy-saving operation mode may be used as appropriate in accordance with the $CO_2$ concentration.

A third aspect of the invention is an embodiment of the first aspect of the invention. In the third aspect, the ventilation device further includes: a communicating section communicating with an air conditioner (1) which conditions the room air (RA), wherein the controller (60) performs switching between the comfortable operation mode and the energy-saving operation mode in accordance with a load of the air conditioner (1).

In this configuration, the comfortable operation mode and the energy-saving operation mode may be used as appropriate in accordance with the load of the air conditioner (1).

ADVANTAGES OF THE INVENTION

According to the first aspect of the invention, the comfortable operation mode and the energy-saving operation mode are used as appropriate so as to improve energy savings with almost no loss of user's comfortability. In addition, if the outdoor air (OA) is comfortable, for example, the comfortable outdoor air (OA) may be taken into the room. This may improve energy savings more effectively, and the user's comfortability is not significantly lost. On top of that the outdoor air (OA) may be used for cooling or heating the room. This may improve energy savings more effectively, and the user's comfortability is not significantly lost.

Further, according to the second aspect of the invention, switching between the comfortable operation mode and the energy-saving operation mode is performed in accordance with the $CO_2$ concentration. This may improve energy savings more effectively, and the user's comfortability is not significantly lost.

Moreover, according to the third aspect of the invention, switching between the comfortable operation mode and the energy-saving operation mode is performed in accordance with the load of the air conditioner (1). This may improve the user's comfortability and energy savings more effectively.

BRIEF DESCRIPTION OF THE DRAWINGS

[FIG. 1] FIG. 1 illustrates an exemplary configuration for an air conditioner according to an embodiment.
[FIG. 2] FIG. 2 schematically illustrates a configuration for a ventilation device according to an embodiment of the present invention.
[FIG. 3] FIG. 3 illustrates a bypass passage bypassing a total heat exchanger.
[FIG. 4] FIG. 4 schematically illustrates a configuration for the total heat exchanger.
[FIG. 5] FIG. 5 illustrates changes with time in number of humans and $CO_2$ concentration in an office in which the ventilation device is installed.

DESCRIPTION OF EMBODIMENTS

Embodiments of the present invention will be described with reference to the drawings. Note that the following description of advantageous embodiments is only an example in nature and is not intended to limit the scope, applications or use of the invention.

(Embodiments of the Invention)

<Air Conditioner>

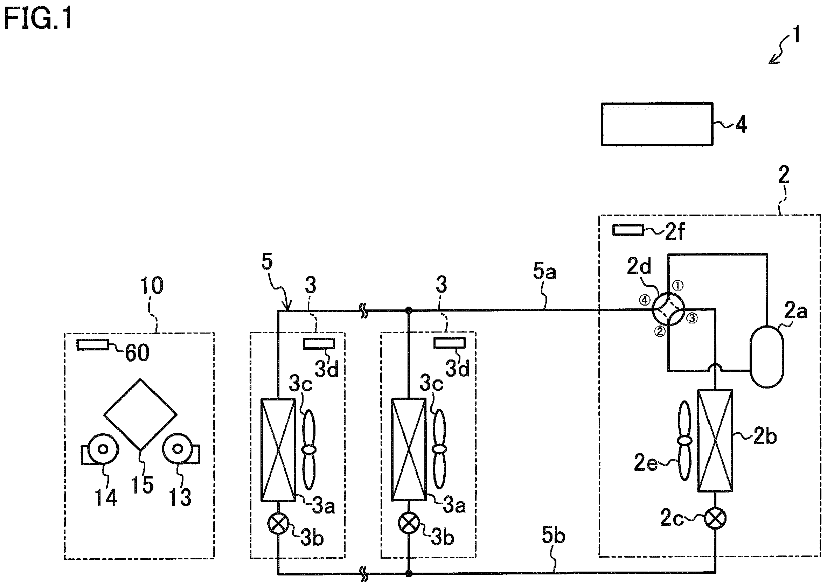

FIG. 1 illustrates an exemplary configuration for an air conditioner (1) according to an embodiment. This air conditioner (1) conditions the air in a room and ventilates the room, and comprises a so-called multiple air conditioner system for buildings. More specifically, the air conditioner (1) includes an outdoor unit (2) arranged outside the room, a plurality of indoor units (3) and a ventilation device (10) arranged inside the room, and a controller (4) manipulated by an operator. In this air conditioner (1), two refrigerant pipes (a gas communication pipe (5a) and a liquid communication pipe (5b)) are connected to the outdoor unit (2), and the plurality of indoor units (3) are connected in parallel to the two refrigerant pipes (5a, 5b). This configuration provides a refrigerant circuit (5) in which a refrigerant is circulated to perform a vapor compression refrigeration cycle.

-Outdoor Unit-

The outdoor unit (2) includes a compressor (2a), an outdoor heat exchanger (2b), an outdoor expansion valve (2c), a four-way switching valve (2d), an outdoor fan (2e), and an outdoor controller (2f). The four-way switching valve (2d) has a first port connected to a discharge end of the compressor (2a), a second port connected to a suction end of the compressor (2a), a third port connected to a gas end of the outdoor heat exchanger (2b), and a fourth port connected to the gas communication pipe (5a). Further, the four-way switching valve (2d) is switchable between a first state (indicated by solid curves in FIG. 1) in which the first and fourth ports communicate with each other and the second and third ports communicate with each other, and a second state (indicated by broken curves in FIG. 1) in which the first and third ports communicate with each other and the second and fourth ports communicate with each other. The outdoor heat exchanger (2b) has a liquid end connected to the liquid communication pipe (5b) through the outdoor expansion valve (2c). The outdoor controller (2f) is configured to be able to communicate with the controller (4), and controls the compressor (2a), the four-way switching valve (2d), and the outdoor fan (2e).

-Indoor Unit-

Each of the indoor units (3) includes an indoor heat exchanger (3a), an indoor expansion valve (3b), an indoor fan (3c), and an indoor controller (3d). The indoor heat exchanger (3a) has a liquid end connected to the liquid communication pipe (5b) through the indoor expansion valve (3b), and a gas end connected to the gas communication pipe (5a). The indoor controller (3d) is configured to be able to communicate with the controller (4), and controls the indoor expansion valve (3b) and the indoor fan (3c).

-Ventilation Device-

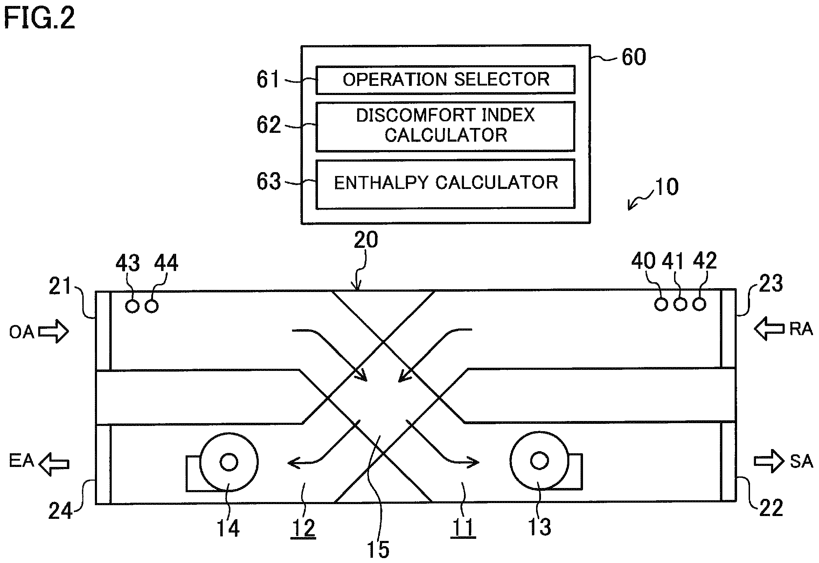

FIG. 2 schematically illustrates the configuration for the ventilation device (10) according to an embodiment of the present invention. As shown in FIG. 2, the ventilation device (10) includes a casing (20), a total heat exchanger (15), various sensors (40-45), and a ventilation controller (60). The ventilation controller (60) is configured to be able to communicate with the controller (4), and controls an air supply fan (13) and an air exhaust fan (14). The configuration for the ventilation device (10) will be described in detail later.

-Controller-

The controller (4) is configured to be able to communicate with the outdoor controller (2f), the indoor controller (3d) and the ventilation controller (60), and transmits and receives control signals for conditioning the air in the room and ventilating the room in response to the manipulation by an operator (e.g., selection of an operation mode and input of set temperature).

<Operation Mechanism of Air Conditioner>

As described above, in the air conditioner (1), the compressor (2a), the outdoor heat exchanger (2b), the outdoor expansion valve (2c), the four-way switching valve (2d), the indoor heat exchanger (3a), and the indoor expansion valve (3b) are connected to comprise the refrigerant circuit (5). This air conditioner (1) performs a heating operation and a cooling operation. In this example, all the indoor units (3) perform the same air conditioning operation (the heating or cooling operation). That is, the air conditioner (1) comprises a cooling/heating switching device in which all the indoor units (3) perform the heating or cooling operation.

-Heating Operation-

During the heating operation, the four-way switching valve (2d) is set to be in the first state, the degree of opening of the outdoor expansion valve (2c) is adjusted to reduce the pressure of a liquid refrigerant to a predetermined pressure, the indoor expansion valve (3b) in each of the indoor units (3) is adjusted to open to a predetermined degree, and the compressor (2a) and the outdoor and indoor fans (2e) and (3c) are driven. Thus, the refrigerant circuit (5) performs a refrigeration cycle in which the indoor heat exchanger (3a) in each of the indoor units (3) functions as a condenser, and the outdoor heat exchanger (2b) functions as an evaporator. The room is heated in this manner.

-Cooling Operation-

During the cooling operation, the four-way switching valve (2d) is set to be in the second state, the outdoor expansion valve (2c) is adjusted to full-open, the indoor expansion valve (3b) in each of the indoor units (3) is adjusted to open to a predetermined degree, and the compressor (2a) and the outdoor and indoor fans (2e) and (3c) are driven. Thus, the refrigerant circuit (5) performs a refrigeration cycle in which the outdoor heat exchanger (2b) functions as a condenser, and the indoor heat exchanger (3a) in each of the indoor units (3) functions as an evaporator. The room is cooled in this manner.

<Configuration for Ventilation Device>

The ventilation device (10) is installed in a building, and is configured to perform ventilation for 24 hours, for example. The ventilation device (10) is configured to be switchable between total heat exchange ventilation for exchanging the air between the inside and the outside of the room while allowing the outdoor air (OA) and the room air (RA) to perform latent heat exchange and sensible heat exchange, and normal ventilation for exchanging the air between the inside and the outside of the room without allowing the outdoor air (OA) and the room air (RA) to exchange heat.

-Casing-

The casing (20) is in the shape of a box, and houses the total heat exchanger (15) therein. In the casing (20), an air supply passage (11) and an air exhaust passage (12) are formed. More specifically, the air supply passage (11) and the air exhaust passage (12) are formed to intersect with each other in the total heat exchanger (15).

The air supply passage (11) is opened toward the outside of the room in an outdoor air suction port (21) outside the room, and is opened toward the inside of the room in a room air supply port (22) inside the room. In the air supply passage (11), the air supply fan (13) is provided to be closer to the inside of the room than the total heat exchanger (15).

The air exhaust passage (12) is opened toward the inside of the room in a room air suction port (23) inside the room, and is opened toward the outside of the room in an exhaust port (24) outside the room. In the air exhaust passage (12), the exhaust fan (14) is provided to be closer to the outside of the room than the total heat exchanger (15).

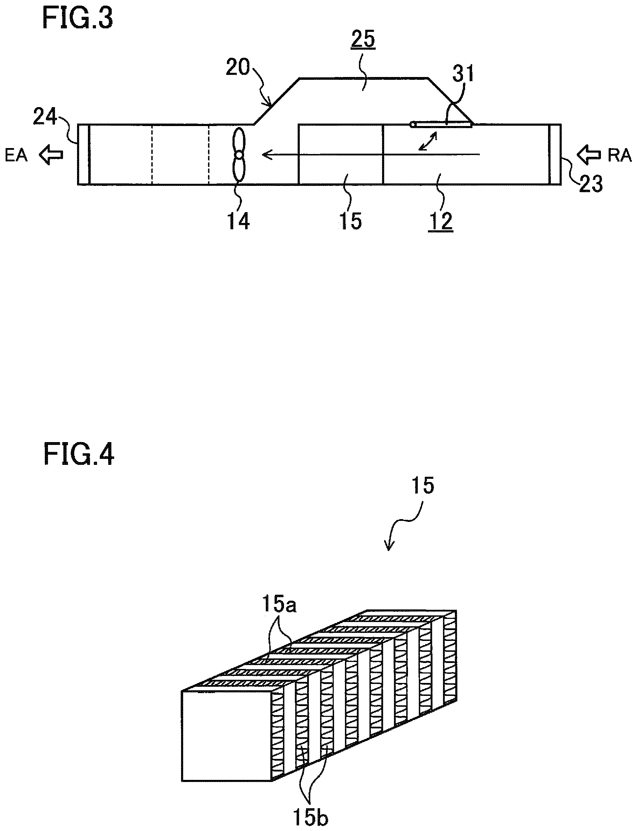

To the air exhaust passage (12), as illustrated in FIG. 3, a bypass passage (25) bypassing the total heat exchanger (15) is connected. The bypass passage (25) has an outside end connected between the total heat exchanger (15) and the exhaust fan (14), and an inside end connected between the total heat exchanger (15) and the room air suction port (23).

A dumper (31) is provided at the inside end of the bypass passage (25). The dumper (31) is configured to switch a flow passage of the room air (RA) between the bypass passage (25) and the total heat exchanger (15). More specifically, the dumper (31) is switched between a first state where the bypass passage (25) is closed and a second state where the bypass passage (25) is opened. The dumper (31) allows the air to flow into the total heat exchanger (15) in the first state, and prohibits the air from flowing into the total heat exchanger (15) in the second state.

-Total Heat Exchanger-

The total heat exchanger (15) allows the air flowing through the air supply passage (11) and the air flowing through the air exhaust passage (12) to exchange heat. As shown in FIG. 4, the total heat exchanger (15) is in the shape of a quadrangular prism. The total heat exchanger (15) includes flat members and corrugated members stacked alternately so as to form air supply channels (15a) through which the air in the air supply passage (11) flows on one of adjacent side surfaces of the total heat exchanger (15), and exhaust channels (15b) through which the air in the air exhaust passage (12) flows on the other one of the adjacent side surfaces. The flat members and the corrugated members are made of a vapor permeable material (e.g., paper), and moisture is movable between the air in the air supply channels (15a) and the air in the exhaust channels (15b). Thus, the total heat exchanger (15) is able to exchange not only sensible heat, but also latent heat.

Moreover, the total heat exchanger (15) is arranged such that its side surface on which the air supply channels (15a) are opened faces the air supply passage (11), and its side surface on which the exhaust channels (15b) are opened faces the air exhaust passage (12). The total heat exchanger (15) is a crossflow heat exchanger in which the extending direction of the air supply channels (15a) is orthogonal to the extending direction of the exhaust channels (15b).

-Various Sensors-

The ventilation device (10) is provided with a $CO_2$ concentration sensor (40), an indoor temperature sensor (41), an indoor humidity sensor (42), an outdoor temperature sensor (43), and an outdoor humidity sensor (44).

The $CO_2$ concentration sensor (40) is arranged in the air exhaust passage (12) to be closer to the inside of the room than the total heat exchanger (15), and detects the $CO_2$ concentration (C) in the room air (RA). The value detected by the $CO_2$ concentration sensor (40) is input to the ventilation controller (60).

The indoor temperature sensor (41) is arranged in the air exhaust passage (12) to be closer to the inside of the room than the total heat exchanger (15), and detects the temperature (Tr) of the room air (RA). The value detected by the indoor temperature sensor (41) is also input to the ventilation controller (60).

The indoor humidity sensor (42) is arranged in the air exhaust passage (12) to be closer to the inside of the room than the total heat exchanger (15), and detects the relative humidity (Rr) of the room air (RA). The value detected by the indoor humidity sensor (42) is also input to the ventilation controller (60).

The outdoor temperature sensor (43) is arranged in the air supply passage (11) to be closer to the outside of the room than the total heat exchanger (15), and detects the temperature (To) of the outdoor air (OA), i.e., the outside temperature. The value detected by the outdoor temperature sensor (43) is also input to the ventilation controller (60).

The outdoor humidity sensor (44) is arranged in the air supply passage (11) to be closer to the outside of the room than the total heat exchanger (15). The outdoor humidity sensor (44) detects the relative humidity (Ro) of the outdoor air (OA). The value detected by the outdoor humidity sensor (44) is input to the ventilation controller (60).

-Ventilation Controller-

The ventilation controller (60) is comprised of a microcomputer and a program operating the same, and includes an operation selector (61), a discomfort index calculator (62), and an enthalpy calculator (63).

-Operation Selector (61)-

The operation selector (61) is configured to perform switching between a comfortable operation mode and an energy-saving operation mode by controlling the dumper (31) and any other suitable components in accordance with the $CO_2$ concentration (C) in the room air (RA). In this context, the comfortable operation mode is an operation mode in which switching between the total heat exchange ventilation and the normal ventilation is performed in accordance with a discomfort index (DI) of the outdoor air (OA). Further, the energy-saving operation mode is an operation mode in which switching between the total heat exchange ventilation and the normal ventilation is performed in accordance with a difference between enthalpy (Ho) of the outdoor air (OA) and enthalpy (Hr) of the room air (RA).

-Discomfort Index Calculator (62)-

The discomfort index calculator (62) calculates a discomfort index (DI) of the outdoor air (OA). In this example, the discomfort index calculator (62) calculates the discomfort index (DI) based on the following equation.

$$DI = 0.81 \times To + 0.01 \times Ro \times (0.99 \times To - 14.3) + 46.3$$

where temperature (To) is a value detected by the outdoor temperature sensor (43), and relative humidity (Ro) is a value detected by the outdoor humidity sensor (44).

-Enthalpy Calculator (63)-

The enthalpy calculator (63) calculates air enthalpies of the outdoor air (OA) and the room air (RA). In this example, the enthalpy calculator (63) calculates the enthalpy (Ho) of the outdoor air (OA) and the enthalpy (Hr) of the room air (RA) based on the following equations.

$$Ho = 1.006 \times To + (1.0805 \times To + 2501) \times Rzo/1000$$

$$Hr = 1.006 \times Tr + (1.0805 \times Tr + 2501) \times Rzr/1000$$

where temperature (To) is a value detected by the outdoor temperature sensor (43), and temperature (Tr) is a value detected by the indoor temperature sensor (41).

Further, Rzo represents the absolute humidity of the outdoor air (OA), and Rzr represents the absolute humidity of the room air (RA). The enthalpy calculator (63) calculates Rzo and Rzr based on the following equations.

$$Rzo = (coefficient\ A \times To + coefficient\ B) \times Ro/100$$

$$Rzr = (coefficient\ A \times Tr + coefficient\ B) \times Rr/100$$

where Ro represents the relative humidity or the outdoor air (OA), Rr represents the relative humidity of the room air (RA), and coefficients A and B are constants determined in accordance with the temperature.

<Operation Mechanism of Ventilation Device>

As can be seen from the foregoing, the ventilation device (10) is configured to perform switching between the comfortable operation mode and the energy-saving operation mode in accordance with the $CO_2$ concentration (C) in the room air (RA). In the following description, an operation in the comfortable operation mode and an operation in the energy-saving operation mode will be separately described below.

-Comfortable Operation Mode-

In the comfortable operation mode, first, the discomfort index calculator (62) calculates the discomfort index (DI). The operation selector (61) performs control such that the normal ventilation is performed if the value of the discomfort index (DI) is in a predetermined range, and the total heat exchange ventilation is performed if the discomfort index (DI) is outside the predetermined range. In this example, the predetermined range is set to be 66-74.

In this embodiment, the normal ventilation is selected if the discomfort index (DI) calculated by the discomfort index calculator (62) is in the range of 66-74. When the normal ventilation is performed, the operation selector (61) switches the dumper (31) to the second state. As a result, the room air (RA) flows through the bypass passage (25) so as to bypass the total heat exchanger (15). Further, since the room air (RA) does not flow through the total heat exchanger (15) while the outdoor air (OA) passes through the total heat exchanger (15), heat exchange does not occur in the total heat exchanger (15). Thus, if the discomfort index (DI) is in the range of 66-74, the comfortable outdoor air (OA) is introduced to the inside of the room as it is, thereby ensuring the user's comfortability. Moreover, energy may be saved in this case.

On the other hand, if the discomfort index (DI) is outside the range of 66-74, the total heat exchange ventilation is selected. When the total heat exchange ventilation is performed, the operation selector (61) switches the dumper (31) to the first state. As a result, the room air (RA) passes through the total heat exchanger (15). Further, the outdoor air (OA) also passes through the total heat exchanger (15). Thus, in the total heat exchanger (15), the outdoor air (OA) and the room air (RA) are allowed to exchange sensible heat. In addition, since the total heat exchanger (15) allows moisture to move between the outdoor air (OA) and the room air (RA), latent heat is also exchanged between the outdoor air (OA) and the room air (RA). That is, in the total heat exchanger (15), sensible heat exchange and latent heat exchange (i.e., total heat exchange) occur between the outdoor air (OA) and the room air (RA).

In this way, if the discomfort index (DI) is outside the range of 66-74, the total heat exchange ventilation is performed to cool or heat the room efficiently. Also in this case, the user's comfortability is ensured.

-Energy-Saving Operation Mode-

In the energy-saving operation mode, the outdoor air (OA) is taken into the room as it is as much as possible so as to use it for air-conditioning. In particular, the enthalpy calculator (63) first calculates the enthalpy (Ho) of the outdoor air (OA) and the enthalpy (Hr) of the room air (RA). After that, in the energy-saving operation mode, an operation performed during heating of the room and an operation performed during cooling of the room are different from each other.

-During Heating-

For example, if the enthalpy (Ho) of the outdoor air (OA) is higher than the enthalpy (Hr) of the room air (RA) during heating of the room, the operation selector (61) performs control so that the normal ventilation is performed. As a result, the outdoor air (OA) having a larger quantity of heat than the room air (RA) is taken in so as to raise the indoor temperature (Tr). Thus, while the outdoor air (OA) is taken in, the heating operation may be stopped, thereby improving energy savings.

If the enthalpy (Ho) of the outdoor air (OA) is lower than the enthalpy (Hr) of the room air (RA), the operation selector (61) performs control so that the total heat exchange ventilation is performed. When the total heat exchange ventilation is performed, the room may be heated efficiently, which also improves the energy savings.

-During Cooling-

On the other hand, if the enthalpy (Ho) of the outdoor air (OA) is lower than the enthalpy (Hr) of the room air (RA) during cooling of the room, the operation selector (61) performs control so that the normal ventilation is performed. As a result, the outdoor air (OA) having a smaller quantity of heat than the room air (RA) is taken in the room as it is, thereby lowering the indoor temperature (Tr). Thus, while the outdoor air (OA) is taken in, the cooling operation may be stopped, thereby improving the energy savings.

If the enthalpy (Ho) of the outdoor air (OA) is higher than the enthalpy (Hr) of the room air (RA), the operation selector (61) performs control so that the total heat exchange ventilation is performed. When the total heat exchange ventilation is performed, the room may be cooled efficiently, which also improves the energy savings.

As can be seen from the foregoing, the comfortable operation mode ensures the energy savings while attaching weight to the comfortability, and the energy-saving operation mode ensures the comfortability while attaching weight to the energy savings.

-Switching between Comfortable Operation Mode and Energy-Saving Operation Mode-

In this embodiment, the operation selector (61) is configured to compare the value of the $CO_2$ concentration (C) detected by the $CO_2$ concentration sensor (40) and a predetermined threshold (Th) so as to perform switching between the comfortable operation mode and the energy-saving operation mode in accordance with the result of the comparison. More specifically, the operation selector (61) selects the comfortable operation mode if the $CO_2$ concentration (C) exceeds the threshold (Th), or selects the energy-saving operation mode if the $CO_2$ concentration (C) is not higher than the threshold (Th). In this example, the threshold is set to be 1000 ppm.

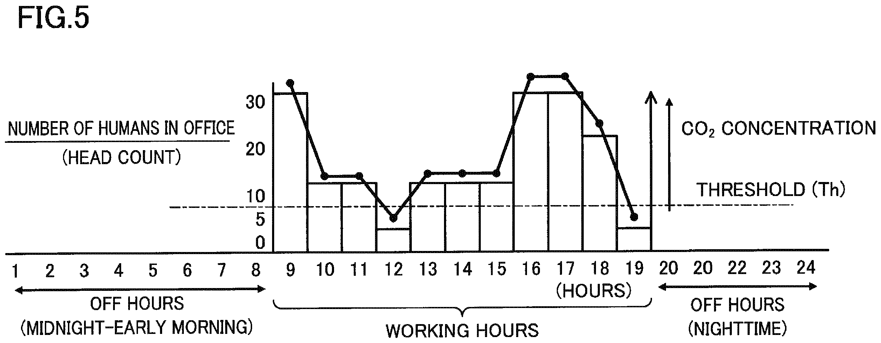

FIG. 5 shows, as an example, changes with time in number of humans and $CO_2$ concentration (C) in an office in which the ventilation device (10) is installed. In this figure, a line graph indicates the $CO_2$ concentration (C). As shown in FIG. 5, the $CO_2$ concentration (C) varies depending on the number of humans in the office. For example, even in the daytime, the number of humans decreases during a lunch break, and so does the $CO_2$ concentration (C). That is, the number of humans and the $CO_2$ concentration (C) in the office correlate with each other.

Therefore, if the $CO_2$ concentration (C) is not higher than the threshold (Th) (i.e., the number of humans in the office is small during a lunch break and the nighttime), the ventilation device (10) attaches weight to the energy savings and selects the energy-saving operation mode. As a result, energy savings may be improved as compared with the conventional ventilation device. In addition, the possibility of losing the user's comfortability may be reduced.

On the other hand, if the $CO_2$ concentration (C) exceeds the threshold (Th) (i.e., there are many humans in the office), weight is attached to the user's comfortability and the comfortable operation mode is selected. Thus, the user may feel more comfortable.

<Advantages of the Present Embodiment>

As can be seen from the foregoing, according to the present embodiment, a ventilation device for ventilating a room is able to improve the energy savings with almost no loss of the user's comfortability.

(Other Embodiments)

In place of the $CO_2$ concentration (C), various conditions may be employed for switching between the comfortable operation mode and the energy-saving operation mode.

For example, switching between the comfortable operation mode and the energy-saving operation mode may be performed in accordance with a load of the air conditioner (1). In this case, switching may be performed if the ventilation controller (60) is allowed to communicate with the controller (4) of the air conditioner (1) to obtain information about the load from the air conditioner (1), for example.

Further, switching between the comfortable operation mode and the energy-saving operation mode may be performed in accordance with detection of humans in a room. For example, the comfortable operation mode may be selected if a human is present in the room, and the energy-saving operation mode may be selected if no human is present in the room. The human detection may be performed by using information from an air conditioner provided with a human detection sensor, for example.

In place of automatic switching between the comfortable operation mode and the energy-saving operation mode performed by the ventilation controller (60), a user may manually switch the operation mode. Specifically, the ventilation device (10) may be configured such that the user is able to send an instruction to the ventilation controller (60) through a remote controller or any other suitable devices.

In addition, the ventilation controller (60) may be provided with a schedule timer function such that switching between the comfortable operation mode and the energy-saving operation mode may be performed by the schedule timer function. As an instance, a schedule may be set such that the comfortable operation mode is selected in the daytime and the energy-saving operation mode is selected in the nighttime.

Further, in installing the air conditioner (1), an installing worker may set the air conditioner (1) to be an air conditioner solely dedicated to the comfortable operation mode, or the energy-saving operation mode only.

In the foregoing description, the air conditioner (1) has been described as the one comprising a cooling/heating switching device in which all the indoor units (3) perform the heating or cooling operation. However, the air conditioner (1) may comprise a heating air conditioner in which all the indoor units (3) perform the heating operation only, or a heating/cooling air conditioner in which each of the indoor units (3) perform the heating or cooling operation individually.

INDUSTRIAL APPLICABILITY

The present invention is useful as a ventilation device for ventilating a room.

DESCRIPTION OF REFERENCE CHARACTERS

1     Air Conditioner
40    $CO_2$ Concentration Sensor
43    Outdoor Temperature Sensor
44    Outdoor Humidity Sensor
60    Ventilation Controller (Controller)
62    Discomfort Index Calculator

**Claims**

1. A ventilation device switchable between total heat exchange ventilation for exchanging air between inside and outside of a room while allowing outdoor air (OA) and room air (RA) to perform sensible heat exchange and latent heat exchange, and normal ventilation for exchanging the air between the inside and the outside of the room without allowing the outdoor air (OA) and the room air (RA) to exchange heat, the ventilation device comprising:

   a controller (6o) adapted to control an operational state of the ventilation device so that the ventilation device operates in either a comfortable operation mode in which switching between the total heat exchange ventilation and the normal ventilation is performed in accordance with a discomfort index (DI) of the outdoor air (OA), or an energy-saving operation mode in which switching between the total heat exchange ventilation and the normal ventilation is performed in accordance with a difference between enthalpy (Ho) of the outdoor air (OA) and enthalpy (Hr) of the room air (RA),
   further comprising:

      an outdoor humidity sensor (44) adapted to detect relative humidity (Ro) of the outdoor air (OA);
      an outdoor temperature sensor (43) adapted to detect temperature (To) of the outdoor air (OA); and
      a discomfort index calculator (62) adapted to calculate the discomfort index (DI) of the outdoor air (OA) based on a value of the relative humidity (Ro) detected by the outdoor humidity sensor (44) and a value of the temperature (To) detected by the outdoor temperature sensor (43), wherein
      the controller (6o) is adapted to perform control such that, in the comfortable operation mode, the normal ventilation is performed if the discomfort index (DI) is in a predetermined range, and the total heat exchange ventilation is performed if the discomfort index (DI) is outside the predetermined range,
      wherein
      in the energy-saving operation mode, the controller (60) performs control such that the normal ventilation is performed if the enthalpy (Ho) of the outdoor air (OA) is higher than the enthalpy (Hr) of the room air (RA), and the total heat exchange ventilation is performed if the enthalpy (Ho) of the outdoor air (OA) is lower than the enthalpy (Hr) of the room air (RA), while the room is being heated, and
      the total heat exchange ventilation is performed if the enthalpy (Ho) of the outdoor air (OA) is higher than the enthalpy (Hr) of the room air (RA), and the normal ventilation is performed if the enthalpy (Ho) of the outdoor air (OA) is lower than the enthalpy (Hr) of the room air (RA), while the room is being cooled.

2. The ventilation device of claim 1, further comprising:

   a CO2 concentration sensor (40) adapted to detect a CO2 concentration (C) in the room air (RA), wherein
   the controller (6o) is adapted to control the operation of the ventilation device so that the ventilation device operates in the comfortable operation mode if a value of the CO2 concentration (C) detected by the CO2 concentration sensor (40) is higher than a predetermined threshold (Th), or in the energy-saving operation mode if the detected value of the CO2 concentration (C) is not higher than the threshold (Th).

3. The ventilation device of claim 1, further comprising:

a communicating section adapted to communicate with an air conditioner (1) which conditions the room air (RA), wherein
the controller (6o) is adapted to perform switching between the comfortable operation mode and the energy-saving operation mode in accordance with a load of the air conditioner (1).

**Patentansprüche**

1. Ventilationsvorrichtung, umschaltbar zwischen Ventilation für völligen Wärmeaustausch zum Austauschen von Luft zwischen dem Inneren und Äußeren eines Raumes, während Außenluft (Outdoor Air (OA)) und Raumluft (Room Air (RA)) spürbaren Wärmeaustausch und latenten Wärmeaustausch durchführen, und normaler Ventilation zum Austauschen der Luft zwischen dem Inneren und dem Äußeren des Raumes, ohne dass die Außenluft (OA) und die Raumluft (RA) Wärme austauschen, wobei die Ventilationsvorrichtung umfasst:

eine Steuerung (60), die gestaltet ist, um einen Betriebszustand der Ventilationsvorrichtung so zu steuern, dass die Ventilationsvorrichtung in entweder einem komfortablen Betriebsmodus, in dem Umschalten zwischen der Ventilation für völligen Wärmeaustausch und der normalen Ventilation gemäß einem Unbehagenindex (Discomfort Index (DI)) der Außenluft (OA) durchgeführt wird, oder einem Energiesparbetriebsmodus arbeitet, in dem Umschalten zwischen der Ventilation für völligen Wärmeaustausch und der normalen Ventilation gemäß einer Differenz zwischen Enthalpie (Ho) der Außenluft (OA) und Enthalpie (Hr) der Raumluft (RA) durchgeführt wird,
ferner umfassend:

einen Außenfeuchtigkeitssensor (44), der gestaltet ist, um relative Feuchtigkeit (Ro) der Außenluft (OA) zu detektieren;
einen Außentemperatursensor (43), der gestaltet ist, um Temperatur (To) der Außenluft (OA) zu detektieren; und eine Unbehagenindexberechnungseinrichtung (62), die gestaltet ist, um den Unbehagenindex (DI) der Außenluft (OA) basierend auf einem Wert der von dem Außenfeuchtigkeitssensor (44) detektierten relativen Feuchtigkeit (Ro) und einem Wert der von dem Außentemperatursensor (43) detektierten Temperatur (To) zu berechnen, wobei
die Steuerung (60) gestaltet ist, um eine Steuerung durchzuführen, sodass, in dem komfortablen Betriebsmodus, die normale Ventilation durchgeführt wird, wenn der Unbehagenindex (DI) in einem vorab festgelegten Bereich liegt, und die Ventilation für völligen Wärmeaustausch durchgeführt wird, wenn der Unbehagenindex (DI) außerhalb des vorab festgelegten Bereiches liegt,
wobei
in dem Energiesparbetriebsmodus die Steuerung (60) eine Steuerung durchführt, sodass die normale Ventilation durchgeführt wird, wenn die Enthalpie (Ho) der Außenluft (OA) höher als die Enthalpie (Hr) der Raumluft (RA) ist, und die Ventilation für völligen Wärmeaustausch durchgeführt wird, wenn die Enthalpie (Ho) der Außenluft (OA) geringer als die Enthalpie (Hr) der Raumluft (RA) ist, während der Raum beheizt wird, und
die Ventilation für völligen Wärmeaustausch durchgeführt wird, wenn die Enthalpie (Ho) der Außenluft (OA) höher als die Enthalpie (Hr) der Raumluft (RA) ist, und die normale Ventilation durchgeführt wird, wenn die Enthalpie (Ho) der Außenluft (OA) geringer als die Enthalpie (Hr) der Raumluft (RA) ist, während der Raum gekühlt wird.

2. Ventilationsvorrichtung nach Anspruch 1, ferner umfassend:

einen $CO_2$ - Konzentrationssensor (40), der gestaltet ist, um eine $CO_2$ - Konzentration (C) in der Raumluft (RA) zu detektieren, wobei
die Steuerung (60) gestaltet ist, um den Betrieb der Ventilationsvorrichtung so zu steuern, dass die Ventilationsvorrichtung in dem komfortablen Betriebsmodus, wenn ein Wert der von dem $CO_2$ - Konzentrationssensor (40) detektierten $CO_2$ - Konzentration (C) höher als ein vorab festgelegter Schwellenwert (Th) ist, oder in dem Energiesparbetriebsmodus arbeitet, wenn der detektierte Wert der $CO_2$ - Konzentration (C) nicht größer als der Schwellenwert (Th) ist.

3. Ventilationsvorrichtung nach Anspruch 1, ferner umfassend:

einen Kommunikationsabschnitt, der gestaltet ist, um mit einer Klimaanlage (1) zu kommunizieren, die die Raumluft (RA) klimatisiert, wobei
die Steuerung (60) gestaltet ist, um Umschalten zwischen dem komfortablen Betriebsmodus und dem Energiesparbetriebsmodus gemäß einer Last der Klimaanlage (1) durchzuführen.

**Revendications**

1. Dispositif de ventilation commutable entre une ventilation par échange thermique total, pour l'échange de l'air entre l'intérieur et l'extérieur d'une pièce, tout en permettant à l'air extérieur (OA) et l'air ambiant (RA) de procéder à un échange de chaleur sensible et à un échange de chaleur latente, et une ventilation normale pour l'échange de l'air entre l'intérieur et l'extérieur d'une pièce sans permettre à l'air extérieur (OA) et l'air ambiant (RA) de procéder à un échange de chaleur, le dispositif de ventilation comprenant :

un régulateur (60) adapté pour commander un état opérationnel du dispositif de ventilation, de sorte que le dispositif de ventilation fonctionne soit dans un mode d'exploitation confortable, dans lequel la commutation entre la ventilation par échange thermique total et la ventilation normale s'effectue conformément à un indice d'inconfort (DI) de l'air extérieur (OA), soit dans un mode d'exploitation éco-énergétique, dans lequel la commutation entre la ventilation par échange thermique total et la ventilation normale s'effectue d'après une différence entre l'enthalpie (Ho) de l'air extérieur (OA) et l'enthalpie (Hr) de l'air ambiant (RA), comprenant en outre :

un capteur d'humidité d'extérieur (44) adapté pour détecter l'humidité relative (Ro) de l'air extérieur (OA) ;
un capteur de température d'extérieur (43) adapté pour détecter la température (To) de l'air extérieur (OA) ; et
un calculateur d'indice d'inconfort (62) adapté pour calculer l'indice d'inconfort (DI) de l'air extérieur (OA) sur la base d'une valeur de l'humidité relative (Ro) détectée par le capteur d'humidité d'extérieur (44) et d'une valeur de la température (To) détectée par le capteur de température d'extérieur (43),
le régulateur (60) étant adapté pour effectuer une régulation, de sorte que dans le mode d'exploitation confortable, la ventilation normale soit effectuée si l'indice d'inconfort (DI) se trouve dans une plage prédéterminée, et la ventilation par échange thermique total soit effectuée si l'indice d'inconfort (DI) est hors de la plage prédéterminée,
en mode d'exploitation éco-énergétique, le régulateur (60) effectuant la régulation de sorte que la ventilation normale soit effectuée si l'enthalpie (Ho) de l'air extérieur (OA) est supérieure à l'enthalpie (Hr) de l'air ambiant (RA), et la ventilation par échange thermique total soit effectuée si l'enthalpie (Ho) de l'air extérieur (OA) est inférieure à l'enthalpie (Hr) de l'air ambiant (RA), pendant que la pièce est chauffée, et
la ventilation par échange thermique total est effectuée si l'enthalpie (Ho) de l'air extérieur (OA) est supérieure à l'enthalpie (Hr) de l'air ambiant (RA), et la ventilation normale est effectuée si l'enthalpie (Ho) de l'air extérieur (OA) est inférieure à l'enthalpie (Hr) de l'air ambiant (RA), pendant que la pièce est refroidie.

2. Dispositif de ventilation selon la revendication 1, comprenant en outre :

un capteur de concentration de $CO_2$ (40) adapté pour détecter une concentration de $CO_2$ (C) dans l'air ambiant (RA), dans lequel
le régulateur (60) est adapté pour commander le déclenchement du dispositif de ventilation de sorte que le dispositif de ventilation fonctionne en mode d'exploitation confortable si une valeur de concentration de $CO_2$ (C) détectée par le capteur de concentration de $CO_2$ (40) est supérieure à un seuil prédéterminé (Th), ou en mode d'exploitation éco-énergétique, si la valeur détectée de la concentration de $CO_2$ (C) n'est pas supérieure au seuil (Th).

3. Dispositif de ventilation selon la revendication 1, comprenant en outre :

une section de communication adaptée pour communiquer avec un climatiseur (1) assurant la climatisation de l'air ambiant (RA),
le régulateur (60) étant adapté pour effectuer une commutation entre le mode d'exploitation confortable et le mode d'exploitation éco-énergétique, conformément à la charge du climatiseur (1).

FIG.1

EP 3 093 568 B1

# FIG.2

- 60
- 61 — OPERATION SELECTOR
- 62 — DISCOMFORT INDEX CALCULATOR
- 63 — ENTHALPY CALCULATOR

EP 3 093 568 B1

FIG.3

FIG.4

# FIG.5

NUMBER OF HUMANS IN OFFICE / (HEAD COUNT)

$CO_2$ CONCENTRATION

THRESHOLD (Th)

30
20
10
5
0

1  2  3  4  5  6  7  8  9  10  11  12  13  14  15  16  17  18  19  20  20  22  23  24

(HOURS)

OFF HOURS
(MIDNIGHT-EARLY MORNING)

WORKING HOURS

OFF HOURS
(NIGHTTIME)

EP 3 093 568 B1

**EP 3 093 568 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011202916 A
- JP 2009243731 A